# EUROPEAN PATENT APPLICATION

(11) **EP 1 691 364 A2**
(43) Date of publication of application: **16.08.2006**
(21) Application number: 06250729.8
(22) Date of filing: 10.02.2006
(51) Int. Cl.: G11B 15/60

(54) **Passive air bearing tape guide**

(30) Priority: 10.02.2005 US 57298
(71) Applicant: QUANTUM CORPORATION, San Jose, CA 95110 (US)
(72) Inventor: Saliba, George A., Northborough Massachusetts 01532-1316 (US)
(74) Representative: Charig, Raymond Julian

(57) **Abstract**

Passive air bearing tape guides, tape drives, and methods of operating tape drives are provided. The passive air bearing tape guide may include a movable guide region having a starting position, and a biasing element configured to resist movement of the movable guide region from the starting position and to return the movable guide region to the starting position. The passive air bearing tape guides described herein may also include a tape-facing surface having hydrodynamic properties for enhancing or sustaining the formation of a air cushion between the passive air bearing tape guide and a tape media as the tape media is drawn over the surface passive air bearing tape guide. Tape drive may include one or more passive air bearing tape guides.

## Description

### BACKGROUND

Storage subsystems, such as magnetic tape libraries, are widely used for storing information in digital form. These tape subsystems may include a storage subsystem controller for controlling one or more tape drive systems contained within the storage subsystem and for controlling other components of the storage subsystem, such as the tape picker, which is used to select and load tape cartridges into the tape drives. The storage subsystem may be coupled to a host system that transmits I/O requests to the storage subsystem via a host/storage connection.

Each tape drive reads and writes data to the primary storage medium, that can be, for example, a magnetic tape medium contained within a removable magnetic tape cartridge. The magnetic tape medium typically comprises a thin film of magnetic material that stores the data. The tape medium may be moved by the tape drive between a pair of spaced apart reels and past a data transducer to record or read back information. In one type of tape drive system, one of the reels is part of the tape drive while the other reel is part of the removable tape cartridge. For this type of tape drive system, the reel that is a part of the tape drive is commonly referred to as a take-up reel, while the reel that is a part of the tape cartridge is commonly referred to as a cartridge reel.

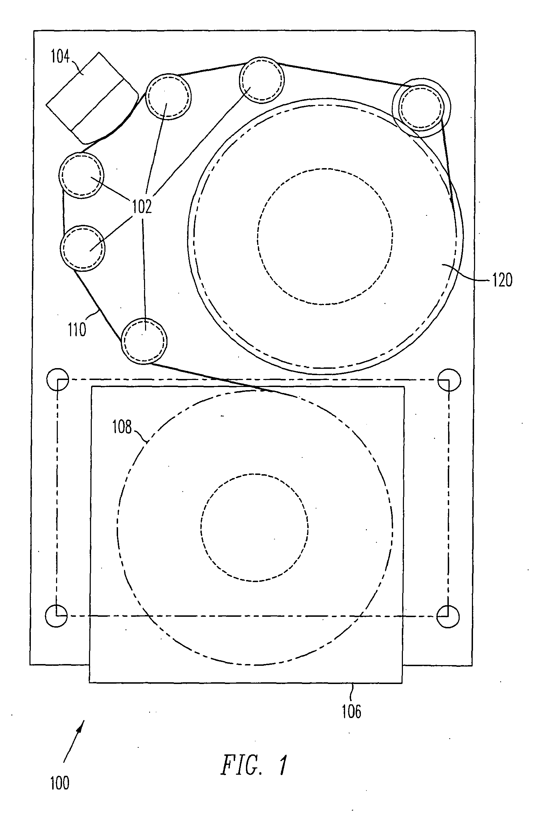

An exemplary tape drive system **100** is shown in FIG. 1. This tape drive system **100** uses a removable tape cartridge 106 containing a cartridge reel **108.** A storage tape **110** having a thin film of magnetic material that stores data is wound about the cartridge reel **108.** The storage tape **110** is moved between a take-up reel **120** and a cartridge reel **108,** past one or more head assemblies **104** to record and/or read back information from the storage tape **110.** With this system, upon insertion of the cartridge **106** into the tape drive **100,** the storage tape **110** on the cartridge reel **106** is coupled to the take-up reel **120** of the tape drive **100.** Subsequently, prior to removing the tape cartridge **106** from the tape drive **100,** the storage tape **110** is rewound onto the cartridge reel **106** and is then uncoupled from the take-up reel **120.**

One or more guides may be provided along the tape path to guide the storage tape **110** as it passes between the cartridge reel **108** and the take-up reel **120.** In some types of tape drive systems, the guides may comprise stationary guides, which remain stationary as the storage tape **110** passes back and forth. At initial start up, a static frictional force exists between the storage tape **110** and the stationary guide. This static frictional force is overcome by a shear force generated when one of the reel drivers rotates one or both of the reels **108, 120** to pull the tape **110** across the stationary guide. Once the tape **110** begins moving, a cushion of air may be formed between the tape **110** and the stationary guide, thereby reducing the frictional force between the tape **110** and the guide. However, at initial start-up the shear force applied to overcome the static frictional force can cause damage to the tape **110.** Over time, this may result in tape failures or data loss. This problem may be exacerbated with tapes having smoother and thinner profiles, as increasingly used with higher density tape media.

In the tape drive system **100** illustrated in FIG. 1, the guides comprise rotating rollers **102.** As the storage tape **110** is drawn back and forth across the head assembly **104,** the rollers **102** roll with the tape to thereby reduce stress on the storage tape 110. At initial start-up, a static frictional force again exists between the roller **102** and the tape **110**. However, as the tape **110** begins moving, the roller **102** rotates with the tape, thereby reducing the shear stress on the tape media.

In operation, rollers **102** may introduce noise in the tape drive system **100,** that may result in unpredictable positioning errors of the tape **110.** Irregularities in the bearings, machining, and assembly can cause axial and radial runout of the roller **102.** As the speed of the tape **110** increases, the amount of noise generated by the rollers **102** may increase as well, thus placing more demand on the head assembly positioning servo control system to accurately follow the lateral tape **110** position.

As the desire for storage capacity for these tape cartridges **106** increases, it has also become desirable to increase the density of data stored and increase the data transfer from and into on the tape medium, to increase the linear tape velocity, and to decrease the thickness of the tape substrate. As a result, guiding the tape **110** past the head assembly **104** along an accurate invariant linear path has become increasingly difficult. One error phenomenon is known as "lateral tape motion" or "LTM." LTM is a major source of tracking errors in linear tape recording. Lateral motion is movement of the tape in a direction orthogonal to primary direction of the tape path. One approach to minimizing LTM tracking errors is to provide a multi-roller tape guide structure, such as the type described in commonly assigned U.S. Pat. No. 5,414,585, to Saliba, entitled, "Rotating Tape Edge Guide", the disclosure of which is incorporated herein by reference in its entirety.

Servo mechanisms have also been used to prevent errors arising from LTM. An optical servo mechanism can be employed to track and monitor lateral motion of a magnetic tape relative to a head assembly **104.** In response to detected lateral movements of the tape **110,** the head assembly **104** can be actively positioned so as to maintain proper tracking. To this end, the magnetic tape **110** can be provided with an optically detectable servo track that can be detected by an optical pick up head that projects a beam of light onto the servo track and detects light reflected back from the servo track. The track position information from the servo track may be fed into a servo control loop that keeps the head assembly properly positioned. Through the use of a head-positioning actuator and closed-loop servo control algorithms, the servo system is able to position the head over track center, even as the tape is wandering through the tape path. Unfortunately, as the tape is moved faster, increasing data transfer, a problem arises when the frequency of the lateral tape movement approaches or exceeds the frequency of the servo control loop, thereby limiting the total capacity of the cartridge. Thus, the servo mechanism may not be capable of maintaining proper positioning of the head assembly **104,** resulting in tracking errors.

Thus, there is a need to both reduce the amount of stress on data storage media, and to decrease any lateral tape motion and other sources of noise arising when running tape drives at high speed.

### BRIEF SUMMARY

Described herein are passive air bearing tape guides, tape drives comprising passive air bearing tape guides, and methods of using tape drives comprising passive air bearing tape guides.

The passive air bearing tape guides described herein comprise a moveable guide region having a starting position, and a biasing element for applying a force to resist movement of the moveable guide region from the starting position.

In some versions, the passive air bearing tape guide is at least partly rotatable. For example, the movement of the guide region may be predominantly rotational motion. The passive air bearing tape guide may comprise an axel about which the moveable guide rotates.

The biasing element of the air bearing tape guide may comprise any appropriate elastic (e.g., flexible) material or shape that is configured to resist movement of the movable guide region from the starting position. For example, the biasing element may comprise a spring such as a leaf spring.

The moveable guide region may comprise any appropriate region of the tape guide that has a starting position. In some versions, the movable guide region is a region of the biasing element. For example, if the biasing element comprises a leaf spring (e.g., a thin, flat piece of metal or some other flexible material), an unsecured end of the leaf spring may be configured as a moveable guide region. Tape media may rest on the surface of the guide region.

The passive air bearing tape guide may further comprise a tape-facing surface for opposing a tape medium. The tape-facing surface may be a portion of (or all of) the movable guide region. Thus, the tape-facing surface may be configured so that a media tape may rest on the tape-facing surface, or may move across (or over) the tape-facing surface. Any side of a tape media (e.g., a side having a magnetic media coating or an side having optical servo tracks) may rest on (or face) the tape-facing surface. The tape-facing surface may be a hydrodynamic surface. The tape-facing surface may further comprise a first perimeter region and a second perimeter region in which the first perimeter region has a larger curvature of rotation than the second perimeter region. This first perimeter region may be positioned opposite (e.g. facing) a tape medium when the moveable guide region is in the starting position.

In some versions of the passive air bearing tape guide, the moveable guide region comprises a cylinder. The moveable guide region may comprise guide flanges.

The biasing element may be further configured to return the moveable guide region to the starting position. The biasing element may increase the resistance to movement from the starting position as the moveable guide region is rotated from the starting position. The biasing element may comprise a bidirectional torsion spring. Thus, the biasing element may oppose rotation of the moveable guide from a starting position.

Also described herein are tape drives comprising a first reel motor for rotating a first reel having a data storage tape medium wound about the first reel, a data transfer head, a second reel motor for rotating a second reel to draw the tape medium from the first reel (across the data transfer head) and onto the second reel, and at least one passive air bearing tape guide for guiding the tape medium between the first reel and the second reel. The passive air bearing tape guide comprises a moveable guide region having a starting position, and a biasing element configured to return the moveable guide region to the starting position. The biasing element is further configured to increases the resistance to movement from the starting position as the moveable guide region is moved from the starting position.

In some versions of the tape drive described herein, the passive air bearing tape guide comprises a tape-facing surface opposite the tape medium. The tape-facing surface may comprise a hydrodynamic surface. The tape-facing surface may comprise a first perimeter region and a second perimeter region, wherein the first perimeter region has a larger radius of curvature than the second perimeter region. The first perimeter region may be configured to face the tape medium when the moveable guide region is in the starting position.

In some versions of the tape drive described herein, the first reel motor is for rotating the first reel disposed in a removable data storage cartridge containing the data storage tape medium, and the first reel comprises a supply reel and the second reel comprises a take-up reel.

Also described herein are methods of operating a tape drive, comprising drawing a data storage tape medium across a data transfer head between a first reel and a second reel, and guiding the tape medium between the first reel and the second reel using at least one passive air bearing tape guide. This air bearing tape guide comprises a moveable guide region having a starting position, and a biasing element that applies a force resisting movement of the moveable guide region from the starting position. In some versions, the biasing element is configured to apply a torque to oppose rotation of the moveable guide region from the starting position.

Other features and aspects of the invention will become apparent from the following detailed description, taken in conjunction with the accompanying drawings which illustrate, by way of example, the features in accordance with embodiments of the invention. The summary is not intended to limit the scope of the invention, which is defined solely by the claims attached hereto.

### BRIEF DESCRIPTION OF THE DRAWINGS

FIG. 1 shows a simplified block diagram of a tape drive system.

FIGS. 2A to 2D show top views of passive air bearing tape guides consistent with the disclosure.

FIGS. 2E to 2H show perspective views of passive air bearing tape guides corresponding to the embodiments shown in FIGS. 2A to 2D.

FIG. 3 shows a perspective view of two passive air bearing tape guides.

FIG. 4 shows another perspective view of two passive air bearing tape guides.

FIG. 5 shows a perspective view of the two passive air bearing tape guides shown in FIG. 4 in which one of the passive air bearing tape guides has been rotated clockwise.

FIG. 6 shows a simplified block diagram of a tape driving system comprising passive air bearing tape guides.

FIGS. 7A, 7B and 7C illustrate the operation of a passive air bearing tape guide.

FIG. 8A shows a perspective view of a passive air bearing tape guide.

FIGS. 8B, 8C, and 8D illustrate the operation of a passive air bearing tape guide as shown in Fig. 8A.

### DETAILED DESCRIPTION

In the following description, reference is made to the accompanying drawings which illustrate several embodiments of the present invention. It is understood that other embodiments may be utilized, and mechanical, compositional, structural, electrical, and operational changes may be made without departing from the spirit and scope of the present disclosure. The following detailed description is not to be taken in a limiting sense, and the scope of the embodiments of the present invention is defined only by the claims of the issued patent.

Passive air bearing tape guides, tape drives including passive air bearing tape guides, and methods of using tape drives with passive air bearing tape guides are described herein.

### Passive Air Bearing Tape Guides

The passive air bearing tape guides (also referred to hereafter as "tape guides") described herein comprise a moveable guide region having a starting position, and a biasing element for applying a force to resist rotation of the movable guide region from the starting position. These tape guides may guide tape media by directing or changing the direction of travel of the tape media. For example, tape media may initially rest on a surface of the tape guide (e.g., a portion of the movable guide region). Tape media may move along the long axis of the tape in either direction. When the tape begins moving, the tape guide may initially move with the tape. For example, when the moveable guide region is rotatable, the tape guide may act as a roller, and the tape guide may pivot about an axle, preventing tape damage due to sticking (e.g., static frictional forces) and torque. Moving the tape guide may allow the tape to "peel" from the tape guide. The biasing element may apply force (e.g., torque) in the direction opposite the movement (e.g., rotational movement) to return the tape guide to a predetermined position for normal high speed operation of the tape guide. At high speed, the tape is moved across a surface of the tape guide on a cushion of air, and the tape guide acts as a stationary guide.

Thus, the tape guides described herein may also be described as hydrodynamic type guides, because tape media may travel over the surface of the tape guide supported on a hydrodynamic film of air that separates the tape media from the surface of the tape guide (e.g. a hydrodynamic surface, described below). In particular, the tape guides may act as stationary hydrodynamic tape guides once the tape is moving. The thickness and stability of this hydrodynamic film of air may depend upon factors including the shape and size of the tape guide (particularly the size of the radius of curvature), surface properties, the tension in the film, and the rate at which the tape media is moving with respect to the tape guide. The tape guides described herein may be optimized to allow a tape media to be supported by a hydrodynamic film of air during much of the operation of the tape guide or any devices incorporating the tape guides.

### Moveable guide region of the tape guide

In general, the moveable guide region comprises a surface on which a media tape may rest (e.g., a tape-facing surface). When the media tape begins to move, the movable guide region may initially move was well. In some versions, the movable guide region is rotatable. However, the movable guide region may move in any appropriate manner to reduce sheer or strain on a tape media when the tape media begins to move.

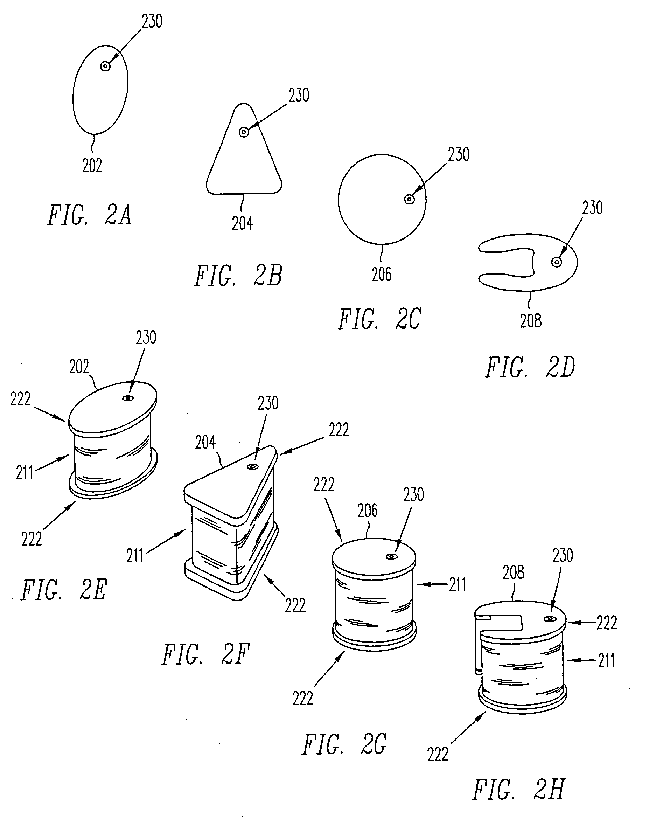

The moveable guide region may be of any useful shape. In some versions, the moveable guide region may comprise a cylindrical shape having a surface along an outer perimeter that may lie opposite of a tape media. Figures 2A-2H show examples of moveable guide regions for various tape guides. Figures 2A-2D show different cross-sectional shapes that may be used for movable guide regions, and Figures 2E-2H show perspective views of these different moveable guide regions.

In Figures 2A and 2E, the movable guide region of the tape guide comprises a cylinder having an oval **202** cross-section. Figures 2B and 2F show a movable guide region having a triangular **204** cross-section. Although the cross-sectional area of the moveable guide region may have virtually any shape, the outer perimeter of the cross-section may be completely or partially "rounded" (as shown in the triangular **204** cross-section). Curved or rounded edges on the cross-sectional area may prevent damage to the tape media, and may allow easier movement of the moveable guide region of the tape guide when it is moved. In one version, the moveable guide region has a circular **206** cross-section, as shown in Figures 2C and 2G.

In some versions of rotatably moveable guide regions, the movable guide is not fully rotated. For example, the biasing element may prevent complete rotation of the movable guide. Thus, the movable guide region may have a cross-section comprising concave and/or irregular regions. For example, Figures 2D and 2H show rotatably movable guide regions that have an oval cross-section that has a cut-away **208.**

Some versions of the movable guide region have a tape-facing surface **211** along an outer perimeter of the movable guide region that is configured to face a tape media. A tape media may be seated on part of this surface 211, for example, when the tape media is not moving.

The tape-facing surface of the movable guide may be specially treated so that it does not damage the tape media. For example, the tape-facing surface may be treated to be smooth, to resist dust or debris, or the like. Moreover, the tape-facing surface may comprise a hydrodynamic surface. A hydrodynamic surface is one which encourages the formation and maintenance of a film of air between a tape media and the tape guide when the tape is in motion. The hydrodynamic surface may comprise a smooth surface that is continuous over at least a region of the surface that will oppose the tape media when it is flowing over the movable guide region. The surface may be electrically conductive to minimize static charge. The hydrodynamic surface may comprise a metal. The hydrodynamic surface may comprise a coating, or a layer, or be intrinsic to the rotatable guide. Examples of hydrodynamic surfaces may be found in U.S. Patent No. 5,299,756 to Hu et al., which is herein incorporated by reference in its entirety. The hydrodynamic surface may be formed by any appropriate process, such as molding or polishing.

Any side of a media tape may rest on the movable guide region. For example, magnetic tape media may have a coated side (e.g., a magnetic coating) and an uncoated side (e.g., for optical tracks). Either the coated or uncoated sides may rest on the movable guide region, or on the tape-facing portion of a movable guide region.

The tape-facing portion, including any hydrodynamic surface region(s) **211,** may be a flat surface (as shown in Figures 2E to 2H) in the lateral direction, or it may be shaped an appropriate way. For example, the tape-facing surface may be concave or convex in the lateral direction or over a region of the lateral surface. The tape-facing surface may match the shape of a tape media. In one version, the tape-facing surface is convex. The shape of the surface may affect the hydrodynamics of the surface, and the tension on the tape media.

The tape-facing surfaceof the movable guide region (e.g., an outer perimeter surface 211, including any hydrodynamic surface region) may have any appropriate lateral dimension. Thus, the lateral width of the outer perimeter surface, or the width of the hydrodynamic surface region, may be smaller, as large as, or larger than, the lateral width of the tape media. The lateral width of the outer perimeter may be greater than the width of the tape media. Furthermore, the upper and/or lower edges of the rotatable guide may comprise a guide flange **222,** as shown in Figures 2E-2H. The guide flange may prevent the tape media from sliding off of the tape guide (e.g., if a device comprising a tape guide and tape media is subject to a jarring movement). These guide flanges may also protect the outer perimeter surface **211,** and may protect a tape media that is directed by the tape guide.

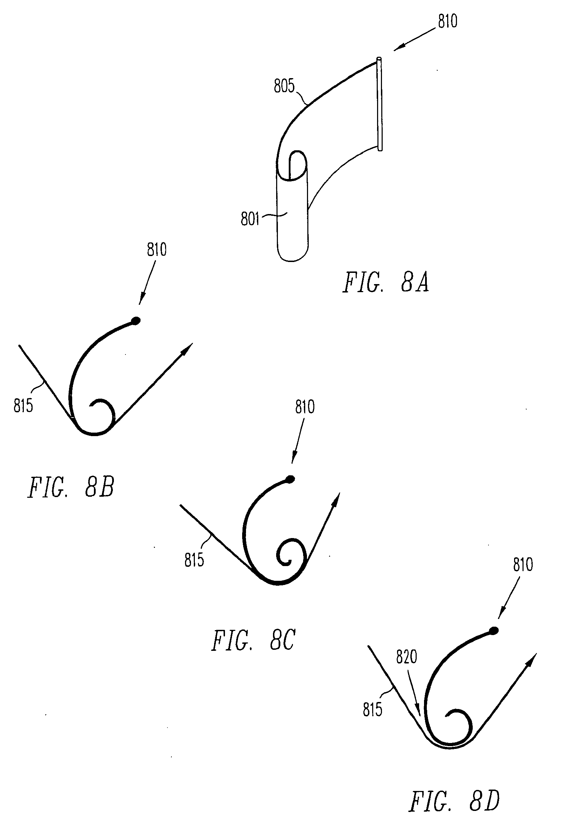

The tape-facing surface of the movable guide may also comprise regions with different radii of curvature. In some versions, a radius of curvature (e.g., radius of rotation) may be measured from a portion of the movable guide region that sits opposite a tape media during operation of the tape guide. Other portions of the movable guide region (including the tape-facing surface and any hydrodynamic surface regions) may have different radii of curvature, as shown in Figure 2. Because the hydrodynamic properties of an outer surface of the rotatable guide may be affected by the radius of curvature, it may be desirable to have regions with different radii of curvature at different regions. For example, a movable guide region may have a first perimeter surface region having a radius of curvature that is greater than a second perimeter surface region. In some versions, the radius of curvature of the movable guide region may change as the movable guide region is moved (e.g., when the movable guide region is part of a biasing element, as shown in Figures 8A-8D, and described below).

It may be desirable to have a region having a greater radius of curvature as part of a hydrodynamic surface. Regions having greater radii of curvature may encourage the formation and maintenance of thicker hydrodynamic air cushions when the tape is moving across them than regions having smaller radii of curvature. The tape guide may be configured so that a region having a higher radius of curvature than another region on the same tape guide may face a tape media when the tape guide is in the starting position (e.g., a neutral position, before movement of the movable guide region of the tape guide). The starting position may be a rotational starting position.

Figure 8A shows another version of a movable guide region 801. In figure 8A, the movable guide region is a portion of the biasing element 805, shown as a leaf spring. In some versions, one end of this leaf spring may be fixed. The movable guide region 801 near the end of the biasing element is shown as a curved, and forms a rounded surface against which the tape media may rest. In this version, the movable guide region may be any shape, including the shapes shown in Figure 2 (e.g., round, triangular, etc.). In some versions, the movable guide region may comprise a cylindrical shape attached to a biasing element, such as a leaf spring. In some versions, the movable guide region rotates about an axis that is centered within a movable guide region.

In versions of the movable guide region that rotates (e.g., "rotatable guides"), the tape guide may comprise an axel. The movable guide regions in Figure 2 show an axle **230** about which a movable guide region may pivot. An axle may be a shaft about which the movable guide region pivots. The lateral ends of the axle may be fixed in position, allowing the movable guide region to rotate around the axle. In some versions, the axle is fixed to (or integral to) the movable guide region. For example, the lateral ends of the axle may be seated in a holder (e.g. a cavity) allowing the axle and the movable guide region to rotate. For example, when the tape guide is used as part of a tape drive, the tape drive may further comprise a mount for holding the tape guide in position; this mount may connect to the axle portion of the tape guide, allowing the movable guide region to rotate about the axle. Alternatively, the axle may mount directly to a region of the tape drive.

The axle may be configured to provide smooth rotational motion of the movable guide region. Thus, the axle may comprise ball bearings, lubricants, or the like. Examples of axles about which a movable guide region may pivot may be found in U.S. Patent No. 4,770,550 to Takahashi, herein incorporated by reference in its entirety.

The axle may be located in any appropriate position. In some versions, the axel passes through the movable guide region. In some versions, the axel is separated from the movable guide region by an appropriate distance. Generally, the axle is oriented to allow the rotatable guide to pivot about a lateral axis, e.g., while tape media moves backwards or forwards along the long axis of the tape media. The axle may pass through the center (e.g. the cross-sectional center) of a movable guide region. In some versions, the axle is located off-center in relation to a movable guide region. Figures 2A-2H show examples of axle locations **230** that are located off-center in relation to a movable guide region.

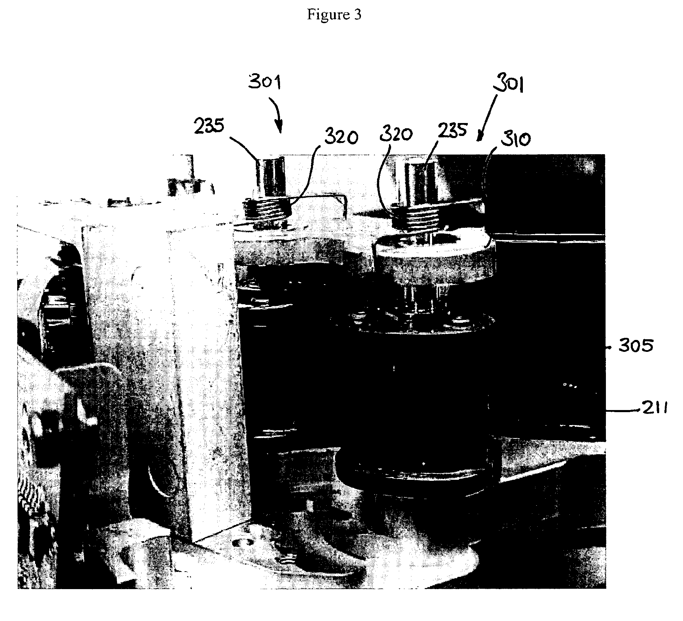

The axle may connect to a mount for holding a tape guide. Figure 3 shows a perspective view of two tape guides **301.** In Figure 3, the axles **235** of the tape guides are secured into an upper mount **310,** and a lower mount **312.** Each tape guide includes a rotatable guide **305,** which may pivot around the axle. Figure 3 also shows a biasing element that is connected to both the rotatable guide **305** and the upper mount **310.**

### Biasing element

The biasing elements 320 shown in Figure 3 are bidirectional torsional springs. However, any appropriate biasing element may be used. In general the biasing element resists movement of the rotatable guide from a neutral (starting) position by applying a force (e.g., a torque) to oppose movement of the movable guide region. This neutral position may be a starting position. The starting position may be any position of the movable guide region. The starting position may comprise a position of the tape guide in which a hydrodynamic surface of the movable guide region is arranged so that the hydrodynamic surface would face a tape medium guided by the tape guide. The hydrodynamic surface may further comprise a portion of the movable guide region comprising a large radius of curvature (e.g., compared to other portions of the movable guide region).

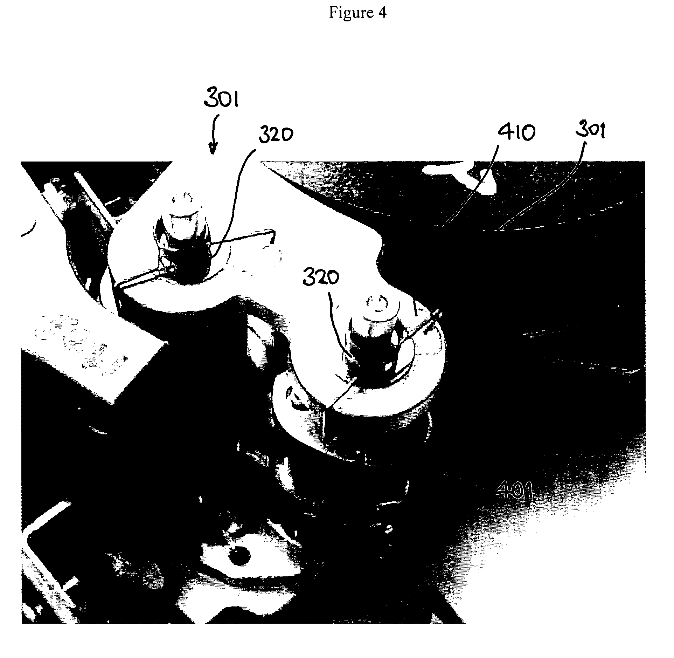

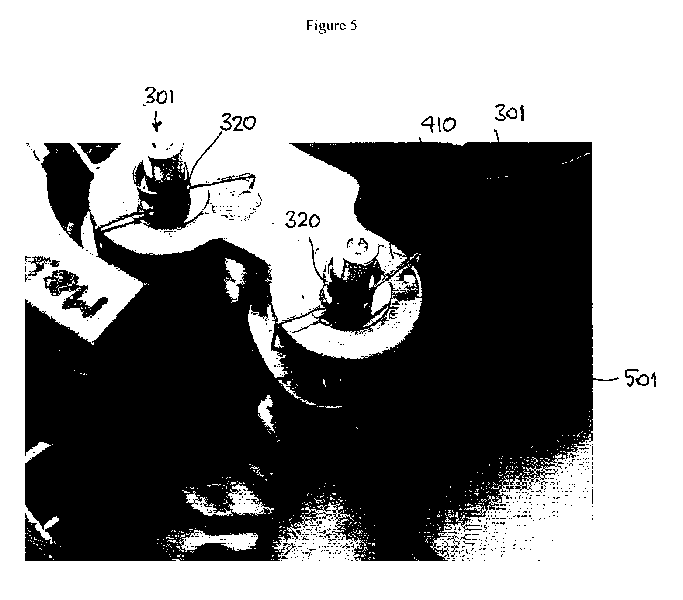

Figures 4 and 5 show perspective views of two tape guides similar to that shown in Figure 3. Figure 4 shows a tape guide in a neutral position **401.** The biasing element is shown as a bidirectional torsional spring. Rotation of the movable guide region in the clockwise or counterclockwise direction results in the biasing element applying torque to oppose the rotation from this neutral position.

The biasing element may be configured to resist movement of the movable guide region to any appropriate degree. In some versions of the device the force provided by the biasing element is proportional to the distance that the movable guide region has been offset from the neutral position. The force provided by the biasing element may be non-linear. For example, the biasing element may begin to apply greater force opposing the movement from the neutral position after the movement exceeds a certain amount. In some version, the biasing element may be controlled or set by a user. The level of force applied by the biasing element per distance offset from the starting position may be preset. For example, when the movable guide region rotates, the torque applied by the biasing element per degree of rotation (e.g., radian) may be preset. The level of force applied by the biasing element may be adjustable.

In Figure 5 the tape guide **301** is shown rotated clockwise **501,** away from the neutral position. For example, when a tape media (not shown) initially at rest against the tape guide is moved to the left, the tape guide initially acts like a roller, and rotates to the left (clockwise). The biasing element applies force opposing this movement. The position of the tape guide ultimately depends on the balance of forces applied by the biasing element and resulting from the movement of the tape media. In Figures 4 and 5 one part of the biasing element is secured to the holder holding the tape guide **410,** and also to the tape guide **301.**

The biasing element may be any appropriate flexible (or elastic) material. Examples of other types of biasing elements that may be used include other mechanical biasing elements (e.g. springs, unidirectional springs, leaf springs, shape memory materials, pneumatics, etc.), electrical and magnetic biasing elements (e.g. piezoelectrics, magnets, etc.), and the like.

More than one biasing element may be used with a tape guide. For example, in Figures 4 and 5, a biasing element **320** is attached to the top of each tape guide **301.** A biasing element may also be attached to the bottom of the tape guide. The biasing element may also be located in any appropriate position. For example, the biasing element may be attached to an axle, a movable guide region, or to both. The biasing element and the movable guide region may be the same component of a tape guide, or they may be overlapping regions of the same tape component of a tape guide. In some versions (e.g. using a magnetic biasing element), the biasing element may not "touch" the tape guide at all, but may act on any region of the tape guide. For example, the biasing element may use a magnetic field to return the movable guide region to the starting position or to apply force to the movable guide region.

### Systems incorporating Passive Air Bearing Tape Guides

Tape guides as described herein may be incorporated into any system or device which may benefit from them. For example, the tape guide may be used as part of a data storage cassette. In some versions of a data storage cassette, a tape medium may be stored on a storage reel. A tape guide may be used to guide the tape medium on or off of the storage reel.

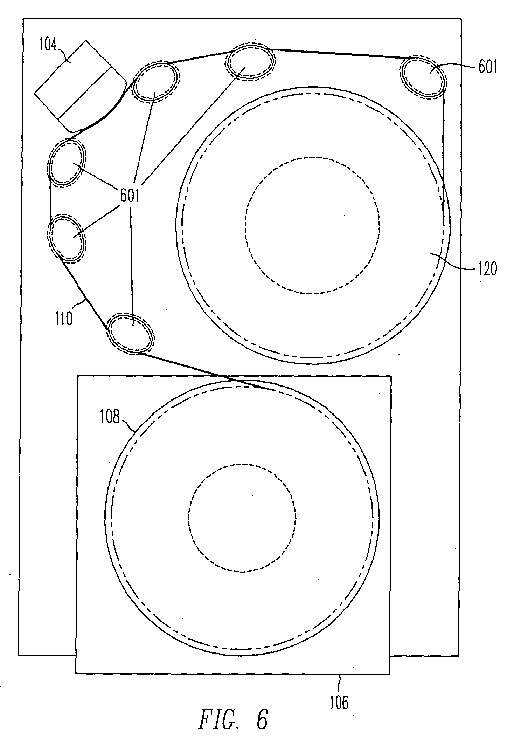

The tape guides described herein may also be used as part of a tape drive system. Figure 6 shows a schematic of a tape drive system similar to that shown in Figure 1. In Figure 6, the tape guides are all shown as passive air bearing tape guides **601.** A removable tape cartridge **106** containing a cartridge reel **108** is shown inserted into a tape drive. The tape media **110** extends from the first reel (the cassette reel **108)** to a second reel **120** (e.g., a takeup reel). The tape media is guided through the tape drive system by tape guides, and the tape media extends past a data transfer head **104.** The first reel may be rotated by a first reel motor. The second reel may be rotated by a second reel motor. The reel motors may be used individually or together to move the tape media through the tape drive system, and transfer the tape media between the first and second reels.

During operation, the tape media **110** travels along a tape path that takes the tape media past several tape guides and past the data transfer head **104.** Sheer forces on the tape medium are reduced because the tape guides begin to move when the tape initially starts moving. Friction (e.g. static and dynamic friction) due to initiation of motion of the tape media across the tape guides initially results in motion of the tape guides. When the friction condition is removed (e.g. during periods of continuous tape motion, particularly when the hydrodynamic effect results in suspending the tape media away from the surface of the tape guide on a cushion of air), the force from the biasing element may return the tape guide to its starting position, or to an intermediate operating position (e.g., a "running" position).

### Methods of Use

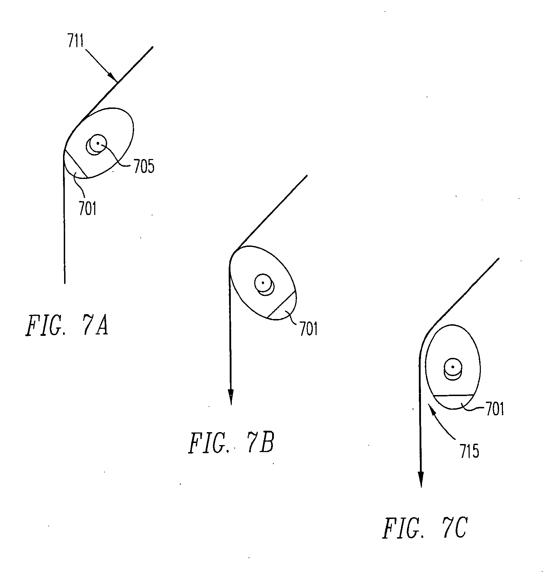

Figures 7A-7C show one example of a tape guide in operation. A region of the tape guide 701 has been labeled with a black mark to show the orientation of the tape guide. In Figure 7A, the tape medium **711** is initially at rest against a surface of the tape guide. A central axel 707 is shown, as well as a schematic of a biasing element **705** (e.g., spring). The tape guide has a rotatably movable guide region that has a rotational starting position. At rest, the biasing element is not applying any net force (e.g., torque) to the movable guide region, and the movable guide region is in the starting position, shown here when the labeling mark **701** is facing down and to the left (e.g. in the "eight o'clock" position). Figure 7B shows the tape guide shortly after the tape medium begins to move in direction shown by the arrow at one end of the tape media **711** (the tape media is moving "down," towards the bottom of the page). The static friction between the tape and the guide causes the movable guide region to rotate, even against a torque on the movable guide region from the biasing element (force applied by the biasing element). Rotating the movable guide region causes the tape to "peel" off of the movable guide region. Thus, in Figure 7B, the movable guide region of the tape guide has rotated counterclockwise as the tape medium is moved "downwards." Although Figure 7B shows the movable guide region of the tape guide moving through only a partial rotation, the movable guide region may be rotated through one or more complete and partial rotations.

As the tape medium peels off of the surface of the movable guide region, the static friction is replaced by dynamic friction between the surface of the rotatable guide and the tape medium. The smaller force on the movable guide region due to the dynamic friction may cause the movable guide region to begin to rotate back towards the starting position. In one version, the movable guide region may reach an equilibrium position, where the force due to the motion of the moving tape media and the torque applied by the biasing element are equal. At some point, the tape medium may become supported above the surface (e.g., the tape-facing surface) of the movable guide region by a cushion of air. Figure 7C shows the movable guide region in a running position, in which the tape medium is supported above the surface of the movable guide region by a cushion of air **715.** In Figure 7C, the running position is different from the starting position. The running position may be approximately the same as the starting position (e.g., when the dynamic forces due to the movement of the tape medium are negligible compared to the force provided by the biasing element). For example, the running position may be within about 10° of the rotational starting position for the movable guide region, or within about 5° of the rotational starting position for the movable guide region.

In some versions of the tape guide, the radius of curvature of the movable guide region at the running position (e.g., the region of movable guide region facing the tape media) may be greater than the rotation radius of the tape guide. Generally, the larger the radius of curvature of the surface facing the tape guide, the lower the dynamic friction may be, because the thickness of an air cushion hydrodynamically formed between the rotatable guide and the tape media may increase as the radius of curvature increases. Thus, as the tape moves across the tape guide, an air cushion may form, further decreasing the dynamic friction as the tape lifts off of the tape guide.

Finally, when the tape media is stopped, or slowed, the tape guide may fully return to the starting position (e.g., in versions of the tape guide in which the running position is different than the starting position).

Figure 8B to 8D shows another example of the operation of a tape guide. In Figure 8, the tape guide comprises a leaf spring as the biasing element. The leaf spring shown is a thin strip of flexible material (e.g., a metal). One end of the biasing element is fixed **810,** and the opposite end of the biasing element is curved to form a movable guide region **801**. Figure 8B shows this tape guide with a tape media **815** resting (not moving) on the surface of the movable guide region. At rest, the biasing element is not applying any net force to the movable guide region, and the movable guide region is in the starting position. Figure 8C shows the tape guide shortly after the tape medium begins to move in direction shown by the arrow at one end of the tape media 815 (the tape media is moving towards the right of the page). The force generated by the motion of the tape (e.g., static friction between the tape and the movable guide region) causes the movable guide region to move, even against a force from the biasing element tending to want to return the movable guide region back to the starting position. The movement of the movable guide region may aid the tape media in peeling off of the movable guide region, reducing the effects of the static friction on the tape media. In Figure 8C, the movable guide region has moved in the direction of tape motion, and has changed shape slightly, enlarging the tape-facing surface of the movable guide region. At some point, the force applied by the biasing element may exceed the force on the movable guide region by the motion of the tape, and the biasing element will return the movable guide region to a running position, shown here as the starting position. In Figure 8D, the tape media is traveling on a cushion of air 820 as it moves over the surface of the movable guide region. The hydrodynamic properties of the movable guide region may help form and sustain the air cushion between the passive air bearing tape guide and the tape media.

While the invention has been described in terms of particular embodiments and illustrative figures, those of ordinary skill in the art will recognize that the invention is not limited to the embodiments or figures described. Furthermore, the figures provided are merely representational and may not be drawn to scale. Certain proportions thereof may be exaggerated, while others may be minimized. The figures are intended to illustrate various implementations of the invention that can be understood and appropriately carried out by those of ordinary skill in the art. Therefore, it should be understood that the invention can be practiced with modification and alteration within the spirit and scope of the appended claims. The description is not intended to be exhaustive or to limit the invention to the precise form disclosed. It should be understood that the invention can be practiced with modification and alteration and that the invention be limited only by the claims and the equivalents thereof.

## Claims

1. A passive air bearing tape guide comprising:
a movable guide region having a starting position; and
a biasing element for applying a force to resist movement of the movable guide region from the starting position.

2. The passive air bearing tape guide of claim 1, wherein the movable guide region is rotatable.

3. The passive air bearing tape guide of claim 2, further comprising an axle about which the movable guide region rotates;

4. The passive air bearing tape guide of claim 1, wherein the biasing element comprises an elastic member.

5. The passive air bearing tape guide of claim 1, wherein the movable guide region comprises a region of the biasing element.

6. The passive air bearing tape guide of claim 4, wherein the biasing element comprises a leaf spring.

7. The passive air bearing tape guide of claim 1, wherein the movable guide region further comprises a tape-facing surface for opposing a tape medium.

8. The passive air bearing tape guide of claim 7, wherein the tape-facing surface comprises a hydrodynamic surface.

9. The passive air bearing tape guide of claim 7, in which the tape-facing surface comprises a first perimeter region and a second perimeter region, wherein the first perimeter region has a larger radius of curvature than the second perimeter region.

10. The passive air bearing tape guide of claim 9, wherein the first perimeter region is configured to be face a tape medium when the movable guide region is in the starting position.

11. The passive air bearing tape guide of claim 1, wherein the movable guide region comprises a cylinder.

12. The passive air bearing tape guide of claim 1, wherein the movable guide region comprises guide flanges.

13. The passive air bearing tape guide of claim 1, wherein the biasing element is further configured to return the movable guide region to the starting position.

14. The passive air bearing tape guide of claim 1, wherein the biasing element increases the resistance to movement from the starting position as the movable guide region is moved from the starting position.

15. The passive air bearing tape guide of claim 14, wherein the biasing element comprises a bidirectional torsion spring.

16. A tape drive comprising:
a first reel motor for rotating a first reel having a data storage tape medium wound about the first reel;
a data transfer head;
a second reel motor for rotating a second reel to draw the tape medium from the first reel, across the data transfer head, and onto the second reel; and
at least one passive air bearing tape guide for guiding the tape medium between the first reel and the second reel, the passive air bearing tape guide comprising: a movable guide region having a starting position; and a biasing element configured to return the movable guide region to the starting position, wherein said biasing element increases the resistance to movement as the movable guide region is moved from the starting position.

17. The tape drive of claim 16, wherein the passive air bearing tape guide comprises a tape-facing surface opposite the tape medium.

18. The tape drive of claim 17, wherein the tape-facing surface comprises a hydrodynamic surface.

19. The tape drive of claim 17, wherein the hydrodynamic surface comprises a first perimeter region and a second perimeter region; further wherein the first perimeter region has a larger radius of rotation than the second perimeter region.

20. The tape drive of claim 18, wherein the first perimeter region is configured to face the tape medium when the movable guide region is in the starting position.

21. The tape drive of claim 16, wherein:
the first reel motor is for rotating the first reel disposed in a removable data storage cartridge containing the data storage tape medium; and
the first reel comprises a supply reel and the second reel comprises a take-up reel.

22. A method of operating a tape drive, comprising:
drawing a data storage tape medium across a data transfer head between a first reel and a second reel;
guiding the tape medium between the first reel and the second reel using at least one passive air bearing tape guide comprising a movable guide region having a starting position; and a biasing element that resists movement of the movable guide region from the starting position.
